# EUROPÄISCHE PATENTSCHRIFT

(11) **EP 2 656 980 B1**
(45) Veröffentlichungstag und Bekanntmachung des Hinweises auf die Patenterteilung: **20.01.2021**
(21) Anmeldenummer: 13001650.4
(22) Anmeldetag: 28.03.2013
(51) Int. Cl.: B25J 9/16, G05B 19/4155, G05B 19/4067

(54) **Verfahren und Mittel zum Vorgeben und/oder Steuern eines Manipulatorprozesses**
Method and means for determining and/or controlling a manipulator process
Procédé et moyen de programmation et/ou de commande d'un processus de manipulateur

(30) Priorität: 24.04.2012 DE 102012008073
(43) Veröffentlichungstag der Anmeldung: 30.10.2013
(73) Patentinhaber: KUKA Deutschland GmbH, 86165 Augsburg (DE)
(72) Erfinder: Wiedemann, Günther, 86368 Gersthofen (DE); Hagenauer, Andreas, 86316 Friedberg (DE); Hüttenhofer, Manfred, 86406 Meitingen (DE); Weiss, Martin, 86459 Margertshausen (DE)
(74) Vertreter: Schlotter, Alexander Carolus Paul

(56) Entgegenhaltungen:
- EP-A2- 2 085 846
- US-B1- 6 360 143

## Beschreibung

Die vorliegende Erfindung betrifft ein Verfahren und ein Mittel zum Vorgeben und/oder Steuern eines Manipulatorprozesses.

Beim Abfahren einer Manipulatorbahn sollen oft in Abhängigkeit von der Position auf der Bahn verschiedene Aktionen ausgeführt werden. Beispielsweise soll abschnittsweise ein Schweißstrom auf- oder abgeschaltet werden, eine Klebe- oder Farbdüse geöffnet oder geschlossen werden, oder ein Spanner geöffnet oder geschlossen werden, um einem manipulatorgeführten Werkzeug die Durchfahrt zu ermöglichen.

Hierzu ist es nach betriebsinterner Praxis bekannt, durch eine Schaltpunkt-Routine auf der Manipulatorbahn Schaltpunkte, im Folgenden Schalt-Bahnpunkte, vorzugeben, die eine Unterroutine zum Ausführen der Aktion aufweist, etwa in der Form:
...
SLIN *P*
TRIGGER WHEN PATH=*Abstand* DELAY=*Zeit* DO *Unterroutine*
SLIN *Q*
...

Durch diese Schaltpunkt-Routine TRIGGER wird ein Schalt-Bahnpunkt im Abstand *Abstand* von dem Endpunkt *Q* des durch SLIN Q als kartesische Gerade vorgegebenen Abschnitts der Manipulatorbahn zwischen deren Bahnpunkten *P* und *Q* vorgegeben. Bei Erreichen des so vorgegebenen Schalt-Bahnpunktes wird nach (bzw. bei *Zeit* < 0 vor) der Zeit *Zeit* die durch die Unterroutine *Unterroutine* vorgegebene Aktion ausgeführt, beispielsweise ein Schweißstrom aufgeschaltet, eine Klebe- oder Farbdüse oder ein Spanner geöffnet.

Beim Abfahren einer vorgegebenen Manipulatorbahn kann es erforderlich sein, ein Stück zurückzufahren, beispielsweise nach Erkennen einer Störung des Prozesses. Nachteilig werden bei einer solchen Rückwärtsbewegung die vorstehend erläuterten Schaltpunkt-Routinen nicht ausgeführt. Musste beispielsweise ein Spanner geöffnet werden, um einem manipulatorgeführten Werkzeug die Durchfahrt zu ermöglichen, wird dieser bei der Rückwärtsbewegung durch die Schaltpunkt-Routine - die nur auf die Vorwärtsbewegung zwischen den Punkten P und Q bezogen ist - nicht erneut automatisch geöffnet.

Aus der US 6,360,143 B1 ist ein Verfahren zum Steuern eines robotergeführten Auftragsystems bekannt, bei dem nach Auftreten eines Fehlers ein Rücksetzabstand in Abhängigkeit von einer Operationsgeschwindigkeit des Roboters derart bestimmt und der Roboter in eine entsprechende Rücksetzposition positioniert wird, dass sichergestellt ist, dass der Roboter beim Erreichen einer Position in der Nähe der Position, in der das Aufbringen fehlerbedingt gestoppt wurde, wieder die Operationsgeschwindigkeit erreicht.

Die EP 2 085 846 A2 offenbart ein Verfahren zum Wiederanfahren eines Roboters, wobei eine robotergeführte Zerstäubungsvorrichtung nach Unterbrechung eines Bearbeitungsprogramms an einem Wideranfahrpunkt auf einer Sollbewegungspfad aufgesetzt und die Zerstäubungsvorrichtung in der Nähe der Position, in der das Zerstäuben fehlerbedingt gestoppt wurde, wieder aktiviert wird.

Aufgabe der vorliegenden Erfindung ist es, einen Manipulatorprozess zu verbessern.

Diese Aufgabe wird durch ein Verfahren mit den Merkmalen des Anspruchs 1 gelöst. Anspruch 6 stellt ein Mittel zum Durchführen eines solchen Verfahrens unter Schutz.

Die Unteransprüche betreffen vorteilhafte Weiterbildungen.

Ein Aspekt der vorliegenden Erfindung betrifft einen Manipulatorprozess für eine Manipulatoranordnung mit einem oder mehreren Manipulatoren, insbesondere Industrierobotern. Der Manipulatorprozess weist eine vorgegebene orientierte Manipulatorbahn der Manipulatoranordnung auf. Unter einer Manipulatorbahn wird vorliegend insbesondere eine diskrete oder kontinuierliche Abfolge von Positionen, insbesondere Lagen und/oder Orientierungen, von einem oder mehreren manipulatorfesten Referenzpunkten, insbesondere eines TCPs eines Manipulators, und/oder von Posen, insbesondere Gelenkkoordinaten, von einem oder mehreren Manipulatoren verstanden. Die Manipulatorbahn kann insbesondere durch die Vorgabe diskreter, insbesondere geteachter, Bahnpunkte und die Vorgabe einer Bahn zwischen diesen Bahnpunkten, etwa einer Geraden oder eines Kreissegments, im Arbeits- oder Konfigurationsraum, oder auch durch die Vorgabe einer Abbildung bzw. Relation, beispielsweise einer Spline-Funktion im Arbeits- oder Konfigurationsraum, vorgegeben werden. Unter einer orientierten Manipulatorbahn wird vorliegend insbesondere eine Manipulatorbahn mit einem vorgegebenen Richtungs- bzw. Durchlaufsinn verstanden, der beispielsweise durch eine Reihenfolge anzufahrender und/oder zu überschleifender Punkte vorgegeben sein kann.

Für diesen Manipulatorprozess bzw. dessen Manipulatorbahn können nach einem Aspekt der vorliegenden Erfindung eine oder mehrere Aktionen vorgegeben und/oder bei diesem Manipulatorprozess bzw. dem Abfahren seiner Manipulatorbahn ausgeführt werden. Eine Aktion im Sinne der vorliegenden Erfindung kann insbesondere eine logische und/oder arithmetische Rechen- und/oder Speicheroperation, insbesondere die Zuweisung einer Variablen, und/oder eine Steuerung der Manipulatoranordnung, insbesondere eines oder mehrerer manipulatorgeführter und/oder umgebungsfester Werkzeuge und/oder Prozessmittel, umfassen, insbesondere sein. Eine Aktion im Sinne der vorliegende Erfindung kann beispielsweise eine Wertzuweisung eines Kennzeichners, ein Bestromen einer manipulatorgeführten Schweißzange oder das Schließen eines umgebungsfesten Spanners sein.

Eine oder mehrere dieser Aktionen können erfindungsgemäß in Abhängigkeit von einer zu der orientierten Manipulatorbahn gegensinnigen, ereignisinitiierten Rückwärtsbewegung undin einer Ausführung in Abhängigkeit von einer zu der orientierten Manipulatorbahn gleichsinnigen Rückkehrbewegung der Manipulatoranordnung vorgegeben und/oder ausgeführt werden. Unter einer ereignisinitiierten Bewegung wird vorliegend insbesondere eine Bewegung der Manipulatoranordnung verstanden, die aufgrund eines äußeren, insbesondere nicht vorgegebenen und/oder nicht regelmäßigen Ereignisses initiiert bzw. ausgeführt wird. In einer Ausführung kann eine ereignisinitiierten Rückwärtsbewegung durch eine manuelle Eingabe eines Bedieners, etwa durch die Betätigung einer Rückfahrtaste, und/oder durch ein Signal, insbesondere ein Fehlersignal, eingeleitet werden, etwa aufgrund der Betätigung eines Not-Halts, einer Abweichung von der Manipulatorbahn, eines fehlerhaften Wertes für den Schweißstrom unter einer unterbrochenen Zugabe des Schutzgases oder dergleichen. In einer Ausführung ist eine ereignisinitiierte Bewegung dadurch gekennzeichnet, dass sie nicht bei jedem Abfahren der vorgegebenen Manipulatorbahn stets an demselben Bahnpunkt eingeleitet wird und/oder von weiteren, nicht manipulatorbahneigenen, Randbedingungen abhängt.

Unter einer gegensinnigen Rückwärtsbewegung wird vorliegend insbesondere eine Bewegung der Manipulatoranordnung, insbesondere eines oder mehrerer Manipulatoren, verstanden, die - wenigstens abschnittsweise - entgegen dem Durchlaufsinn der orientierten Manipulatorbahn erfolgt. Die Rückwärtsbewegung kann insbesondere einen Startpunkt aufweisen, der auf der Manipulatorbahn liegt, d.h. von der Manipulatorbahn ausgehen, und bezüglich dieses Startpunktes lokal gegensinnig zu der Manipulatorbahn sein. Die Rückwärtsbewegung kann einen zu der Manipulatorbahn parallelen Abschnitt aufweisen. Unter einem parallelen Abschnitt wird vorliegend insbesondere ein im Arbeits- oder Konfigurationsraum kongruenter Abschnitt, beispielsweise eine parallele Gerade, ein konzentrisches Kreissegment oder dergleichen, verstanden. Insbesondere kann der parallele Abschnitt auch mit einem - gegensinnig abzufahrenden - Abschnitt der Manipulatorbahn identisch sein, d.h. die Rückwärtsbewegung - wenigstens abschnittsweise - auf der Manipulatorbahn erfolgen. Gleichermaßen kann die Rückwärtsbewegung einen von der Manipulatorbahn wegführenden Abschnitt aufweisen, an den sich insbesondere ein paralleler Abschnitt anschließen kann, so dass die Manipulatorbahn bei der Rückwärtsbewegung abschnittsweise mit einem Offset bzw. einer Ablage gegensinnig durchfahren wird.

Unter einer gleichsinnigen Rückkehrbewegung wird vorliegend insbesondere eine Bewegung der Manipulatoranordnung, insbesondere eines oder mehrerer Manipulatoren, verstanden, die - wenigstens abschnittsweise - mit dem gleichen Durchlaufsinn wie die orientierte Manipulatorbahn erfolgt. Die gleichsinnige Rückkehrbewegung kann in einer Ausführung im Anschluss an eine gegensinnige Rückwärtsbewegung, insbesondere unmittelbar oder nach einer Pause, erfolgen und/oder einen Endpunkt aufweisen, der auf der Manipulatorbahn liegt und bezüglich dessen die Rückkehrbewegung lokal gleichsinnig zu der Manipulatorbahn sein kann. Der Endpunkt bzw. dessen Projektion kann mit dem Startpunkt einer vorangehenden Rückwärtsbewegung bzw. dessen Projektion identisch sein oder - im Durchlaufsinn der Manipulatorbahn - vor oder hinter diesem liegen. In einer Ausführung wird die vorgegebene Manipulatorbahn nach einem ereignisinitiierten Abfahren der Rückwärts- und Rückkehrbewegung, beginnend an deren Endpunkt, weiter abgefahren.

Die Rückkehrbewegung kann ebenfalls einen zu der Manipulatorbahn parallelen Abschnitt aufweisen, insbesondere auch mit einem - gleichsinnig erneut abzufahrenden - Abschnitt der Manipulatorbahn identisch sein, d.h. die Rückkehrbewegung kann - wenigstens abschnittsweise - auf der Manipulatorbahn erfolgen. Gleichermaßen kann die Rückkehrbewegung einen auf die Manipulatorbahn zurückführenden Abschnitt aufweisen, insbesondere, um einen Offset bzw. eine Ablage einer vorangehenden Rückwärtsbewegung zu kompensieren.

Eine oder mehrere der Aktionen können in Abhängigkeit von der Rückwärtsbewegung vorgegeben bzw. ausgeführt werden. Insbesondere kann vorgesehen sein, dass eine oder mehrere Aktionen wahlweise, insbesondere auch oder nur bei der Rückwärtsbewegung, ausgeführt werden. So kann beispielsweise ein Spanner, der beim Abfahren der vorgegebenen Manipulatorbahn nach dem Durchgang eines manipulatorgeführten Werkzeugs geschlossen wurde, bei einer Rückwärtsbewegung wieder geöffnet werden.

Zusätzlich oder alternativ können eine oder mehrere Aktionen in Abhängigkeit von der Rückkehrbewegung vorgegeben bzw. ausgeführt werden. Insbesondere kann vorgesehen sein, dass eine oder mehrere Aktionen wahlweise, insbesondere auch oder nur bei der Rückkehrbewegung, ausgeführt werden. So kann beispielsweise ein Spanner, der bei einer Rückwärtsbewegung wieder geöffnet wurde, bei einer Rückkehrbewegung nach dem Durchgang eines manipulatorgeführten Werkzeugs wieder geschlossen werden.

Eine oder mehrere Aktionen können insbesondere bei bzw. nach Beendigung einer Rückwärtsbewegung und/oder einer Rückkehrbewegung vorgegeben bzw. ausgeführt werden. Beispielsweise kann es zweckmäßig sein, Aktionen, die bei Beginn des Manipulatorprozesses ausgeführt wurden, etwa eine optische oder akustische Warnung, eine Spülung, Temperierung oder dergleichen, bei Beendigung der Rückwärtsbewegung und/oder der Rückkehrbewegung erneut auszuführen. Gleichermaßen können eine oder mehrere Aktionen auch während der Rückwärts-bzw. -kehrbewegung ausgeführt werden, insbesondere in Abhängigkeit der Position der Manipulatoranordnung in Relation zu der vorgegebenen Manipulatorbahn.

Eine oder mehrere Aktionen können in einer Ausführung in Abhängigkeit von der Rückwärtsbewegung und/oder Rückkehrbewegung unterschiedlich vorgegeben bzw. ausgeführt werden. Hierunter wird vorliegend insbesondere verstanden, dass eine Aktion - beispielsweise die Zuweisung eines Wertes zu einer Variablen oder das Öffnen eines Spanners - für eine Rückwärtsbewegung vorgegeben bzw. bei einer Rückwärtsbewegung ausgeführt werden kann, und eine hiervon verschiedene Aktion - beispielsweise die Zuweisung eines anderen Wertes zu der Variablen oder das Schließen eines Spanners - für eine Rückkehrbewegung vorgegeben bzw. bei einer Rückkehrbewegung ausgeführt werden kann. Zusätzlich oder alternativ kann dieselbe oder eine hiervon verschiedene Aktion - beispielsweise die Zuweisung eines weiteren Wertes zu der Variablen - für das Abfahren der vorgegebenen Manipulatorbahn vorgegeben bzw. beim Abfahren der vorgegebenen Manipulatorbahn ausgeführt werden. Allgemein ist dabei vorgesehen, dass die Aktion für das planmäßige Abfahren der vorgegebenen Manipulatorbahn, das ereignisinitiierte Ausführen einer Rückwärtsbewegung und/oder einer, insbesondere daran anschließenden, Rückkehrbewegung unterschiedlich vorgebbar ist bzw. wahlweise ausgeführt wird. Eine Aktion kann insbesondere auch dadurch unterschiedlich ausgeführt werden, dass sie wahlweise ausgeführt oder nicht ausgeführt wird.

Wie einleitend erläutert, ist es aus betriebsinterner Praxis bekannt, für eine Manipulatorbahn einen oder mehrere Schalt-Bahnpunkte vorzugeben, um beim planmäßigen Abfahren der Manipulatorbahn in Abhängigkeit von diesen Schalt-Bahnpunkten, insbesondere deren Erreichen bzw. Überfahren, eine vorgegebene Aktion auszulösen, beispielsweise einen Spanner zu öffnen, eine manipulatorgeführte Schweißzange zu bestromen oder dergleichen.

Nach einer Ausführung der vorliegenden Erfindung werden solche Schalt-Bahnpunkte nunmehr auch genutzt, um eine Aktion in Abhängigkeit von der Rückwärtsbewegung und/oder Rückkehrbewegung, insbesondere wahlweise bzw. unterschiedlich, vorzugeben bzw. auszuführen. Die Aktion kann somit in Abhängigkeit von der Rückwärtsbewegung und/oder Rückkehrbewegung und in Abhängigkeit von einem Schalt-Bahnpunkt, insbesondere unterschiedlich, vorgegeben bzw. ausgeführt werden.

In einer Weiterbildung kann die Aktion in Abhängigkeit von einem projizierten Abstand der Manipulatoranordnung zu einem Schalt-Bahnpunkt bei der Rückwärtsbewegung und/oder der Rückkehrbewegung, insbesondere unterschiedlich, vorgegeben bzw. ausgeführt werden. Bei einem Abfahren der vorgegebenen Manipulatorbahn bewegt sich ein die Position der Manipulatoranordnung kennzeichnender Punkt, beispielsweise der TCP im Arbeitsraum oder ein Vektor der Gelenkkoordinaten im Konfigurationsraum, auf der in diesem Raum vorgegebenen Manipulatorbahn. Bei einer Rückwärts- bzw. -kehrbewegung bewegt sich dieser Punkt entsprechend im Arbeits- bzw. Konfigurationsraum, bei einer Ablage jenseits der Manipulatorbahn. Dieser Punkt kann, insbesondere parallel zu einer Normalen auf die Manipulatorbahn oder die Rückwärts- bzw. -kehrbewegung, auf die Manipulatorbahn projiziert werden. Gleichermaßen kann auch der Schalt-Bahnpunkt umgekehrt auf die Rückwärts- bzw. -kehrbewegung projiziert werden, insbesondere, wenn diese in einer Ausführung der vorliegenden Erfindung - wenigstens abschnittsweise - automatisiert erfolgt und somit vorgegeben ist, beispielsweise parallel zu einem Abschnitt der Manipulatorbahn. Der projizierte Punkt kann gegenüber der senkrechten Projektion auch auf der Manipulator- oder Rückwärts- bzw. -kehrbewegungsbahn in oder entgegen deren Durchlaufsinn versetzt sein, insbesondere einer tatsächlichen Bewegung voraus- oder nacheilen. Unter einem projizierten Abstand der Manipulatoranordnung wird vorliegend entsprechend insbesondere der Abstand eines die Position der Manipulatoranordnung kennzeichnenden, auf die Manipulatorbahn projizierten Punktes zu dem Schalt-Bahnpunkt oder der Abstand eines die Position der Manipulatoranordnung kennzeichnenden Punktes zu dem auf die Rückwärts- bzw. - kehrbewegung(sbahn) projizierten Schalt-Bahnpunkt verstanden. Die Aktion kann dann insbesondere ausgeführt werden, wenn der projizierte Abstand einen Grenzwert unterschreitet, insbesondere zu Null wird, insbesondere, wenn ein die Position der Manipulatoranordnung kennzeichnender, auf die Manipulatorbahn projizierter Punkt einen Schalt-Bahnpunkt erreicht bzw. überfährt. Bildlich kann der projizierte Punkt als Punkt auf der Manipulatorbahn gedacht werden, der sich entsprechend einer Rückwärts- bzw. -kehrbewegung auf der Manipulatorbahn mitbewegt. Erfolgt die Rückwärts- bzw. -kehrbewegung - wenigstens abschnittsweise - auf der Manipulatorbahn, so kann die Projektion eine Identität sein.

Zusätzlich oder alternativ zu einer, insbesondere unterschiedlichen, Ausführung der Aktion bei einem Erreichen bzw. Überfahren eines dieser Aktion zugeordneten Schalt-Bahnpunktes durch einen die Position der Manipulatoranordnung kennzeichnenden, auf die Manipulatorbahn projizierten Punktes kann eine Aktion auch bei Beendigung einer Rückwärts- und/oder Rückkehrbewegung in Abhängigkeit davon erfolgen, ob der projizierte Abstand der Manipulatoranordnung zu diesem Schalt-Bahnpunkt positiv oder negativ ist. Auf diese Weise können insbesondere Aktionen, deren Schalt-Bahnpunkte bei einem Abfahren eines Abschnitts der Manipulatorbahn bereits überfahren wurden, wahlweise nochmals ausgeführt werden, insbesondere auch, wenn sie bei der Rückwärts- bzw. -kehrbewegung nicht projiziert überfahren werden.

Wie einleitend ausgeführt, ist es aus betriebsinterner Praxis bekannt, durch eine Schaltpunkt-Routine Schalt-Bahnpunkte vorzugeben, die eine Unterroutine zum Ausführen der Aktion aufweist, etwa in der Form:
...
SLIN *P*
TRIGGER WHEN PATH=*Abstand* DO *Unterroutine*
SLIN *Q*
...

In einer bevorzugten Ausführung ist die Funktionalität der Schaltpunkt-Routine so erweitert, dass diese in Abhängigkeit von der Rückwärtsbewegung und/oder Rückkehrbewegung, insbesondere unterschiedlich, vorgebbar ist bzw. ausgeführt wird, beispielsweise in der Form:
...
SLIN *P*
TRIGGER WHEN PATH=*Abstand* DO *Unterroutine* **[FIRE_COND=*Bewegung*]**
SLIN *Q*
...

Die, vorzugsweise Boolsche und/oder mehrwertige, Größe *Bewegung* kann insbesondere eine Systemvariable sein, die angibt, welche Bewegungsart aktuell vorliegt. Über sie kann bestimmt werden, ob die Schaltpunkt-Routine ausgeführt wird, falls die vorgegebene Manipulatorbahn abgefahren wird (*Bewegung* = REGULAR), eine Rückwärtsbewegung ausgeführt wird (*Bewegung* = BACKWARD), eine Rückwärtsbewegung abgeschlossen ist (*Bewegung* = RESTART), eine Rückkehrbewegung ausgeführt wird (*Bewegung* = REPLAY) und/oder eine Rückkehrbewegung abgeschlossen ist. Vorzugsweise wird die Schaltpunkt-Routine defaultmäßig nur beim Abfahren der Manipulatorbahn oder defaultmäßig stets ausgeführt.

Zusätzlich oder alternativ kann die Funktionalität der Unterroutine so erweitert werden, dass diese in Abhängigkeit von der Rückwärtsbewegung und/oder Rückkehrbewegung, insbesondere unterschiedlich, vorgebbar ist bzw. ausgeführt wird, beispielsweise in der Form:
...
SLIN *P*
TRIGGER WHEN PATH=*Abstand* DO *Unterroutine()* **[FIRE_COND=Bewegung]**
SLIN *Q*
wobei in der Unterroutine der Bewegungskontext ausgewertet wird:

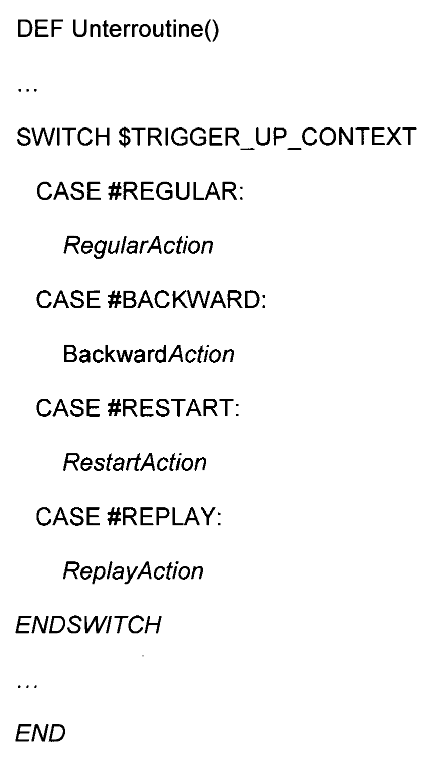

Die in der Schaltpunkt-Routine vorgegebene Unterroutine *Unterroutine* führt in Abhängigkeit von der Systemvariablen $TRIGGER_UP_CONTEXT = *Bewegung* eine Aktion unterschiedlich aus. Hierzu kann die Unterroutine auf die Systemvariable zurückgreifen oder diese ihr übergeben werden, etwa in der Form Unterroutine (*Bewegung*).

Wird also im aktuellen Betrieb beispielsweise eine vorgegebene Manipulatorbahn abgefahren, ist die Systemvariable *Bewegung mit* "REGULAR" belegt. Entsprechend kann im oberen Beispiel der Trigger aktiviert werden, falls dies durch "FIRE_COND=REGULAR" vorgegeben worden ist. Im unteren Beispiel greift die Unterroutine auf diese Systemvariable *Bewegung* zu und führt entsprechend ("CASE #REGULAR") die hierfür vorgegebene Aktion *RegularAction* aus.

Ein Aspekt der vorliegenden Erfindung betrifft ein Verfahren zum Vorgeben eines Manipulatorprozesses. Unter einem Vorgeben wird insbesondere ein Erstellen und/oder Modifizieren, insbesondere Parametrieren, eines Programms für die Manipulatoranordnung verstanden, beispielsweise durch Verwenden und Parametrieren der oben erläuterten erweiterten Funktionalität einer Schaltpunkt- und/oder ihrer Unterroutine. Ein weiterer Aspekt der vorliegenden Erfindung betrifft ein Verfahren zum Steuern eines solchen Manipulatorprozesses. Unter einem Steuern wird vorliegend insbesondere das Übermitteln bzw. Umsetzen von Bewegungs- und anderen Steuerbefehlen der Manipulatoranordnung und/oder deren Aktuierung, beispielsweise eine Bestromung von Antrieben und/oder Werkzeugen, verstanden, insbesondere die Ausführung eines Programms. Ein weiterer Aspekt der vorliegenden Erfindung betrifft ein Mittel zum Vorgeben und/oder Steuern eines solchen Manipulatorprozesses. Ein Mittel im Sinne der vorliegenden Erfindung kann insbesondere soft- und/oder hardwaretechnisch ausgebildet sein. In einer Ausführung umfasst es ein Programm, ein Computerprogrammprodukt, insbesondere einen Datenträger, mit einem hierauf gespeicherten Programm, und/oder einen Computer mit einem Ein-/Ausgabemittel, insbesondere einer Tastatur, einem Bildschirm oder dergleichen, einem Speichermittel und einem Verarbeitungs- bzw. Rechenmittel. Das Mittel ist insbesondere zum Vorgeben und/oder Steuern des Manipulatorprozesses eingerichtet und kann hierzu beispielsweise einen oder mehrere, insbesondere parametrierbare, Befehle aufweisen.

Weitere Vorteile und Merkmale ergeben sich aus den Unteransprüchen und den Ausführungsbeispielen. Hierzu zeigt, teilweise schematisiert, die einzige:

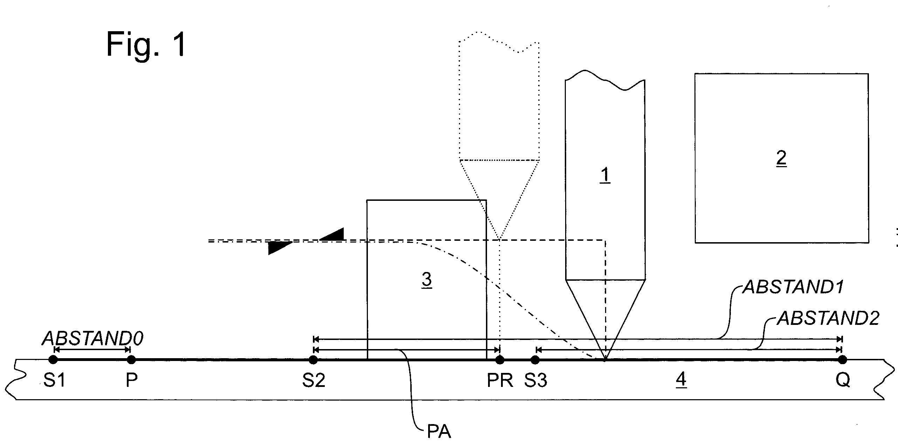

- Fig. 1:: einen Teil einer Manipulatoranordnung beim Ausführen eines Manipulatorprozesses nach einer Ausführung der vorliegenden Erfindung.

Fig. 1 zeigt eine robotergeführte Schweißzangen-Elektrode 1 und eine Robotersteuerung 2 einer Manipulatoranordnung nach einer Ausführung der vorliegenden Erfindung bei einem Manipulatorprozess in Form eines Schweißens eines durch Spanner 3 fixierten Werkstücks 4, der mittels eines Mittels bzw. nach einem Verfahren nach einer Ausführung der vorliegenden Erfindung vorgegeben worden ist bzw. ausgeführt wird. Die Robotersteuerung 2 stellt ein Mittel im Sinne der vorliegenden Erfindung zum Vorgeben und Steuern des Manipulatorprozesses der Manipulatoranordnung dar.

In Fig. 1 ist ausgezogen die Manipulatorbahn des TCPs, hier der Spitze der Schweißzangen-Elektrode 1, eingezeichnet. Sie ist beispielsweise vorgegeben durch die Programmbefehle
TRIGGER WHEN PATH=*Abstand0* DO *TEMP* FIRE_COND=(*TRUE*, *FALSE, FALSE,*
*TRUE)*
SLIN *P*
TRIGGER WHEN PATH=*Abstand1* DO *OPEN*(*FIRE_COND*)
TRIGGER WHEN *PATH*=*Abstand2* DO *CLOSE*(*FIRE_COND*)
SLIN *Q*
mit den geteachten Bahnpunkten *P*, *Q*.

Die Größe *FIRE_COND* weist vier Boolsche Ausdrücke auf:
*FIRE_COND* = (TRUE, FALSE, FALSE, FALSE) gibt ein reguläres Abfahren der vorgegebenen Manipulatorbahn an,
*FIRE_COND* = (FALSE, TRUE, FALSE, FALSE) eine Rückwärtsbewegung (strichliert in Fig. 1),
*FIRE_COND* = (FALSE, FALSE, TRUE, FALSE) eine Rückkehrbewegung (strichpunktiert in Fig. 1), und
*FIRE_COND* = (FALSE, FALSE, FALSE, TRUE) die Beendigung einer Rückwärtsbewegung.

Beim regulären Abfahren der vorgegebenen Manipulatorbahn, insbesondere im Automatikbetrieb, wird entsprechend *FIRE_COND* = (TRUE, FALSE, FALSE, FALSE) vorgegeben. Initiiert ein Ereignis, beispielsweise ein Fehlersignal oder die Betätigung einer Rückwärtsfahrtaste, eine Rückwärtsbewegung, wird die Größe auf *FIRE_COND* = (FALSE, TRUE, FALSE, FALSE) geändert. Wird die Rückwärtsbewegung beendet, beispielsweise weil die Rückwärtsfahrtaste nicht mehr betätigt ist oder ein automatisierter Rückzug infolge des Fehlersignals erreicht ist, wird die Größe auf *FIRE_COND* = (FALSE, FALSE, FALSE, TRUE) geändert. Bei der Rückkehrbewegung wird die Größe auf *FIRE_COND* = (FALSE, FALSE, TRUE, FALSE) geändert, beim Weiterfahren auf der Manipulatorbahn schließlich wieder in *FIRE_COND* = (TRUE, FALSE, FALSE, FALSE).

Zunächst wird ein reguläres Abfahren der Manipulatorbahn erläutert:
Erreicht die Schweißzangen-Elektrode 1 den ersten Schalt-Bahnpunkt S1, der *Abstand0* vor dem Punkt *P* liegt, wird die Unterroutine *TEMP* aufgerufen, da die Schaltpunkt-Routine
TRIGGER WHEN PATH=*Abstand0* DO *TEMP* FIRE_COND=*(TRUE*, *FALSE, FALSE, TRUE)*
ausgeführt wird, wenn der erste oder vierte Ausdruck von *FIRE_COND "TRUE" ist.* Diese Routine temperiert das Werkstück 4 vor.

Erreicht die Schweißzangen-Elektrode 1 den zweiten Schalt-Bahnpunkt S2, der *Abstand1* vor dem Punkt *Q* liegt, wird die Unterroutine *OPEN* mit der Größe *FIRE_COND* = (TRUE, FALSE, FALSE, FALSE) aufgerufen. Diese Unterroutine öffnet den Spanner 3, falls der erste oder dritte Boolsche Ausdruck TRUE ist.

Die Schweißzangen-Elektrode 1 fährt an dem geöffneten Spanner 3 vorbei. Erreicht die Schweißzangen-Elektrode 1 den dritten Schalt-Bahnpunkt S3, der *Abstand2* vor dem Punkt *Q* liegt, wird die Unterroutine *CLOSE* mit der Größe *FIRE_COND* = (TRUE, FALSE, FALSE, FALSE) aufgerufen. Diese Unterroutine schließt den Spanner 3, falls der erste oder dritte Boolsche Ausdruck TRUE ist.

Initiiert ein Ereignis die Rückwärtsbewegung, so bewegt sich die Schweißzangen-Elektrode 1 automatisiert, wie in Fig. 1 strichliert dargestellt. Ihre senkrechte Projektion PR auf die Manipulatorbahn (vertikal in Fig. 1), die in Fig. 1 punktiert für eine Position der Manipulatoranordnung bzw. ihrer Schweißzangen-Elektrode 1 während der Rückwärtsbewegung angedeutet ist, überfährt bei dieser Rückwärtsbewegung zunächst den dritten Schaltpunkt S3. Die ihm zugeordnete Schaltpunkt-Routine
TRIGGER WHEN PATH=*Abstand2* DO *CLOSE(FIRE COND)*
ruft dabei die Unterroutine *CLOSE* mit der Größe *FIRE_COND* = (FALSE, TRUE, FALSE, FALSE) auf. Diese öffnet (aufgrund der Rückwärtsbewegung) nun den Spanner 3, d.h. führt eine unterschiedliche Aktion aus, um der Schweißzangen-Elektrode 1 die Durchfahrt zu ermöglichen.

Entsprechend schließt die Unterroutine *OPEN,* die mit *FIRE_COND* = (FALSE, TRUE, FALSE, FALSE) aufgerufen wird, nun den Spanner 3 nach Durchfahrt der Schweißzangen-Elektrode 1, wenn ihre Projektion den zweiten Schalt-Bahnpunkt S2 überfährt, um das Werkstück 4 wieder zu fixieren. Zur Verdeutlichung ist in Fig. 1 der projizierte Abstand PA der Projektion PR zu dem Schalt-Bahnpunkt S2 angedeutet: wird dieser Abstand zu Null, wird die Schaltpunkt-Routine aufgerufen.

Ist die Rückwärtsbewegung beendet, wird die Größe auf *FIRE_COND* = (FALSE, FALSE, FALSE, TRUE) geändert. Da der erste Schaltpunkt S1 vor der Projektion der Schweißzangen-Elektrode 1 liegt, wird die ihm zugeordnete Schaltpunkt-Routine ausgeführt, d.h. eine - zwischenzeitlich gegebenenfalls nach Zeitablauf abgeschaltete - Vortemperierung erneut durchgeführt.

Nun fährt die Schweißzangen-Elektrode 1 automatisiert auf die Manipulatorbahn zurück (strichpunktiert in Fig. 1), die Größe wird auf *FIRE_COND* = (FALSE, FALSE, TRUE, FALSE) geändert.

Überfährt bei dieser Rückkehrbewegung die Projektion der Schweißzangen-Elektrode 1 auf die Manipulatorbahn den zweiten bzw. dritten Schaltpunkt S2 bzw. S3, so rufen die diesen zugeordneten Schaltpunkt-Routinen die Unterroutine *OPEN* bzw. *CLOSE* mit der Größe *FIRE_COND* = (FALSE, FALSE, TRUE, FALSE) auf, die daraufhin - wie bei einem regulären Abfahren der Manipulatorbahn - den Spanner 3 öffnen bzw. schließen.

Anschließend wird die Manipulatorbahn weiter abgefahren.

Man erkennt, dass durch die Erweiterung der Funktionalität der Schaltpunkt-Routinen bzw. ihrer Unterroutinen derart, dass sie in Abhängigkeit von einer Rückwärts- und Rückkehrbewegung ausgeführt werden, der Manipulatorprozess auch bei einer ereignisinitiierten Abweichung von einem regulären Abfahren der Manipulatorbahn wohlgeordnet und insbesondere automatisiert vorgegeben bzw. gesteuert werden kann.

Dabei kann es, insbesondere bei einfachen Unterroutinen, vorteilhaft sein, die Schaltpunkt-Routinen selber in Abhängigkeit von der Rückwärts- und Rückkehrbewegung aufzurufen bzw. auszuführen, wie am Beispiel der Schaltpunkt-Routine zum ersten Schaltpunkt exemplarisch erläutert. Gleichermaßen kann es vorteilhaft sein, die Unterroutine in Abhängigkeit von der Rückwärts- und Rückkehrbewegung unterschiedlich vorzugeben bzw. auszuführen, wie am Beispiel der Schaltpunkt-Routine zum zweiten und dritten Schaltpunkt exemplarisch erläutert.

### Bezugszeichenliste

- 1: Schweißzangen-Elektrode (Manipulatoranordnung)
- 2: Robotersteuerung (Manipulatoranordnung)
- 3: Spanner (Manipulatoranordnung)
- 4: Werkstück
- S1, S2, S3: Schalt-Bahnpunkt
- P, Q: geteachte Bahnpunkte
- PA: projizierter Abstand
- PR: Projektion auf Manipulatorbahn

## Patentansprüche

1. Verfahren zum Vorgeben und/oder Steuern eines Manipulatorprozesses für eine Manipulatoranordnung (1, 2, 3) mit wenigstens einem Manipulator, insbesondere Industrieroboter,
wobei der Manipulatorprozess eine vorgegebene orientierte Manipulatorbahn der Manipulatoranordnung aufweist,
wobei
die Manipulatorbahn wenigstens einen Schalt-Bahnpunkt (S1, S2, S3) aufweist, um beim planmäßigen Abfahren der Manipulatorbahn in Abhängigkeit von diesem Schalt-Bahnpunkt eine vorgegebene Aktion auszulösen, **dadurch gekennzeichnet, dass** wenigstens eine Aktion in Abhängigkeit von einer zu der orientierten Manipulatorbahn gegensinnigen, ereignisinitiierten Rückwärtsbewegung und/oder einer zu der orientierten Manipulatorbahn gleichsinnigen Rückkehrbewegung der Manipulatoranordnung, die im Anschluss an die Rückwärtsbewegung, insbesondere unmittelbar oder nach einer Pause, erfolgt und einen Endpunkt aufweist, der auf der Manipulatorbahn liegt, und in Abhängigkeit von diesem Schalt-Bahnpunkt , insbesondere unterschiedlich, vorgebbar ist bzw. ausgeführt wird.

2. Verfahren nach Anspruch 1, wobei die Aktion in Abhängigkeit von einem projizierten Abstand (PA) der Manipulatoranordnung zu diesem Schalt-Bahnpunkt bei der Rückwärtsbewegung und/oder der Rückkehrbewegung, insbesondere unterschiedlich, vorgebbar ist bzw. ausgeführt wird.

3. Verfahren nach einem der vorhergehenden Ansprüche, weiter beinhaltend eine Schaltpunkt-Routine (TRIGGER), die eine Unterroutine (TEMP, OPEN, CLOSE) zum Ausführen der Aktion aufweist, wobei die Schaltpunkt-Routine oder die Unterroutine in Abhängigkeit von der Rückwärtsbewegung und/oder Rückkehrbewegung, insbesondere unterschiedlich, vorgebbar ist bzw. ausgeführt wird.

4. Verfahren nach einem der vorhergehenden Ansprüche, wobei die Rückwärtsbewegung einen Startpunkt auf der Manipulatorbahn, einen von der Manipulatorbahn wegführenden Abschnitt und/oder einen zu der Manipulatorbahn parallelen Abschnitt aufweist.

5. Verfahren nach einem der vorhergehenden Ansprüche, wobei die Rückkehrbewegung einen zu der Manipulatorbahn parallelen Abschnitt, einen auf die Manipulatorbahn zurückführenden Abschnitt und/oder einen Endpunkt auf der Manipulatorbahn aufweist.

6. Mittel zum Vorgeben und/oder Steuern eines Manipulatorprozesses für eine Manipulatoranordnung (1, 2, 3) mit wenigstens einem Manipulator, insbesondere Industrieroboter,
wobei der Manipulatorprozess eine vorgegebene orientierte Manipulatorbahn der Manipulatoranordnung aufweist,
wobei
die Manipulatorbahn wenigstens einen Schalt-Bahnpunkt (S1, S2, S3) aufweist, um beim planmäßigen Abfahren der Manipulatorbahn in Abhängigkeit von diesem Schalt-Bahnpunkt eine vorgegebene Aktion auszulösen, **dadurch gekennzeichnet, dass** das Mittel dazu eingerichtet ist, wenigstens eine Aktion in Abhängigkeit von einer zu der orientierten Manipulatorbahn gegensinnigen, ereignisinitiierten Rückwärtsbewegung und/oder einer zu der orientierten Manipulatorbahn gleichsinnigen Rückkehrbewegung der Manipulatoranordnung, die im Anschluss an die Rückwärtsbewegung, insbesondere unmittelbar oder nach einer Pause, erfolgt und einen Endpunkt aufweist, der auf der Manipulatorbahn liegt, und in Abhängigkeit von diesem Schalt-Bahnpunkt , insbesondere unterschiedlich, vorzugeben bzw. auszuführen.

7. Mittel nach Anspruch 6, wobei die Aktion in Abhängigkeit von einem projizierten Abstand (PA) der Manipulatoranordnung zu diesem Schalt-Bahnpunkt bei der Rückwärtsbewegung und/oder der Rückkehrbewegung, insbesondere unterschiedlich, vorgebbar ist bzw. ausgeführt wird.

8. Mittel nach einem der vorhergehenden Ansprüche 6 bis 7, wobei eine Schaltpunkt-Routine (TRIGGER), die eine Unterroutine (TEMP, OPEN, CLOSE) zum Ausführen der Aktion aufweist vorgesehen ist, wobei die Schaltpunkt-Routine oder die Unterroutine in Abhängigkeit von der Rückwärtsbewegung und/oder Rückkehrbewegung, insbesondere unterschiedlich, vorgebbar ist bzw. ausgeführt wird.

9. Mittel nach einem der vorhergehenden Ansprüche 6 bis 8, wobei die Rückwärtsbewegung einen Startpunkt auf der Manipulatorbahn, einen von der Manipulatorbahn wegführenden Abschnitt und/oder einen zu der Manipulatorbahn parallelen Abschnitt aufweist.

10. Mittel nach einem der vorhergehenden Ansprüche 6 bis 9, wobei die Rückkehrbewegung einen zu der Manipulatorbahn parallelen Abschnitt, einen auf die Manipulatorbahn zurückführenden Abschnitt und/oder einen Endpunkt auf der Manipulatorbahn aufweist.

## Claims

1. A method of specifying and/or controlling a manipulator process for a manipulator arrangement (1, 2, 3) comprising at least one manipulator, in particular an industrial robot,
wherein the manipulator process comprises a given oriented manipulator path of the manipulator arrangement,
wherein
the manipulator path has at least one switching path point (S1, S2, S3) in order to trigger a predetermined action as a function of this switching path point when the manipulator path is being traversed in accordance with a plan,
**characterised in that**
at least one action can be specified or is carried out, in particular in different ways, as a function of a reverse movement of the manipulator arrangement, which reverse movement of the manipulator arrangement is in the opposite direction to the oriented manipulator path and is initiated by an event, and/or as a function of a return movement of the manipulator arrangement, which return movement of the manipulator arrangement is in the same direction as the oriented manipulator path and which takes place following the reverse movement, in particular immediately after the reverse movement or after a pause, and which has an end point which is located on the manipulator path, and as a function of this switching path point.

2. The method according to claim 1, wherein the action can be specified or is carried out, in particular in different ways, as a function of a projected distance (PA) of the manipulator arrangement to this switching path point during the reverse movement and/or during the return movement.

3. The method according to any one of the preceding claims, further comprising a switching point routine (TRIGGER) which comprises a subroutine (TEMP, OPEN, CLOSE) for carrying out the action, wherein the switching point routine or the subroutine can be specified or is carried out, in particular in different ways, as a function of the reverse movement and/or as a function of the return movement.

4. The method according to any one of the preceding claims, wherein the reverse movement has a starting point on the manipulator path, a portion leading away from the manipulator path and/or a portion running parallel to the manipulator path.

5. The method according to any one of the preceding claims, wherein the return movement has a portion running parallel to the manipulator path, a portion leading back to the manipulator path and/or an end point on the manipulator path.

6. A means for specifying and/or controlling a manipulator process for a manipulator arrangement (1, 2, 3) comprising at least one manipulator, in particular an industrial robot,
wherein the manipulator process comprises a given oriented manipulator path of the manipulator arrangement,
wherein
the manipulator path has at least one switching path point (S1, S2, S3) in order to trigger a predetermined action as a function of this switching path point when the manipulator path is being traversed in accordance with a plan,
**characterised in that**
the means is set up to specify or to carry out, in particular in different ways, at least one action as a function of a reverse movement of the manipulator arrangement, which reverse movement of the manipulator arrangement is in the opposite direction to the oriented manipulator path and is initiated by an event, and/or as a function of a return movement of the manipulator arrangement, which return movement of the manipulator arrangement is in the same direction as the oriented manipulator path and which takes place following the reverse movement, in particular immediately after the reverse movement or after a pause, and which has an end point which is located on the manipulator path, and as a function of this switching path point.

7. The means according to claim 6, wherein the action can be specified or is carried out, in particular in different ways, as a function of a projected distance (PA) of the manipulator arrangement to this switching path point during the reverse movement and/or during the return movement.

8. The means according to any one of the preceding claims 6 to 7, wherein a switching point routine (TRIGGER) is provided which comprises a subroutine (TEMP, OPEN, CLOSE) for carrying out the action, wherein the switching point routine or the subroutine can be specified or is carried out, in particular in different ways, as a function of the reverse movement and/or as a function of the return movement.

9. The means according to any one of the preceding claims 6 to 8, wherein the reverse movement has a starting point on the manipulator path, a portion leading away from the manipulator path and/or a portion running parallel to the manipulator path.

10. The means according to any one of the preceding claims 6 to 9, wherein the return movement has a portion running parallel to the manipulator path, a portion leading back to the manipulator path and/or an end point on the manipulator path.

## Revendications

1. Procédé de définition et/ou de commande d'un processus de manipulateur pour un ensemble manipulateur (1, 2, 3) avec au moins un manipulateur, en particulier robot industriel,
dans lequel le processus de manipulateur présente une trajectoire de manipulateur orientée prédéfinie de l'ensemble manipulateur,
dans lequel
la trajectoire de manipulateur présente au moins un point de trajectoire de commutation (S1, S2, S3) pour déclencher une action prédéfinie lorsque la trajectoire de manipulateur est parcourue comme prévu en fonction de ce point de trajectoire de commutation, **caractérisé en ce que**
au moins une action peut être prédéfinie ou est réalisée, en particulier de manière différente, en fonction d'un mouvement de recul initié par un événement, dans le sens opposé à la trajectoire de manipulateur orientée et/ou d'un mouvement de retour dans le même sens que la trajectoire de manipulateur orientée de l'ensemble manipulateur, qui a lieu après le mouvement de recul, en particulier immédiatement ou après une pause, et présente un point final, qui se trouve sur la trajectoire de manipulateur, et en fonction de ce point de trajectoire de commutation.

2. Procédé selon la revendication 1, dans lequel l'action peut être prédéfinie ou est réalisée, en particulier de manière différente, en fonction d'une distance projetée (PA) de l'ensemble manipulateur par rapport à ce point de trajectoire de commutation lors du mouvement de recul et/ou du mouvement de retour.

3. Procédé selon l'une quelconque des revendications précédentes, contenant en outre une routine de point de commutation (TRIGGER), qui présente une sous-routine (TEMP, OPEN, CLOSE) pour la réalisation de l'action, dans lequel la routine de point de commutation ou la sous-routine peut être prédéfinie ou est réalisée, en particulier de manière différente, en fonction du mouvement de recul et/ou du mouvement de retour.

4. Procédé selon l'une quelconque des revendications précédentes, dans lequel le mouvement de recul présente un point de départ sur la trajectoire de manipulateur, une section s'éloignant de la trajectoire de manipulateur et/ou une section parallèle à la trajectoire de manipulateur.

5. Procédé selon l'une quelconque des revendications précédentes, dans lequel le mouvement de retour présente une section parallèle à la trajectoire de manipulateur, une section revenant à la trajectoire de manipulateur et/ou un point final sur la trajectoire de manipulateur.

6. Moyen de définition et/ou de commande d'un processus de manipulateur pour un ensemble manipulateur (1, 2, 3) avec au moins un manipulateur, en particulier robot industriel,
dans lequel le processus de manipulateur présente une trajectoire de manipulateur orientée prédéfinie de l'ensemble manipulateur,
dans lequel
la trajectoire de manipulateur présente au moins un point de trajectoire de commutation (S1, S2, S3) pour déclencher une action prédéfinie lorsque la trajectoire de manipulateur est parcourue comme prévu en fonction de ce point de trajectoire de commutation, **caractérisé en ce que**
le moyen est aménagé pour prédéfinir ou réaliser, en particulier de manière différente, au moins une action en fonction d'un mouvement de recul initié par un événement, dans le sens opposé à la trajectoire de manipulateur orientée et/ou d'un mouvement de retour dans le même sens que la trajectoire de manipulateur orientée de l'ensemble manipulateur, qui a lieu après le mouvement de recul, en particulier immédiatement ou après une pause, et présente un point final, qui se trouve sur la trajectoire de manipulateur, et en fonction de ce point de trajectoire de commutation.

7. Moyen selon la revendication 6, dans lequel l'action peut être prédéfinie ou est réalisée, en particulier de manière différente, en fonction d'une distance projetée (PA) de l'ensemble manipulateur par rapport à ce point de trajectoire de commutation lors du mouvement de recul et/ou du mouvement de retour.

8. Moyen selon l'une quelconque des revendications précédentes 6 à 7, dans lequel une routine de point de commutation (TRIGGER), qui présente une sous-routine (TEMP, OPEN, CLOSE) pour la réalisation de l'action, est prévue, dans lequel la routine de point de commutation ou la sous-routine peut être prédéfinie ou est réalisée, en particulier de manière différente, en fonction du mouvement de recul et/ou du mouvement de retour.

9. Moyen selon l'une quelconque des revendications précédentes 6 à 8, dans lequel le mouvement de recul présente un point de départ sur la trajectoire de manipulateur, une section s'éloignant de la trajectoire de manipulateur et/ou une section parallèle à la trajectoire de manipulateur.

10. Moyen selon l'une quelconque des revendications précédentes 6 à 9, dans lequel le mouvement de retour présente une section parallèle à la trajectoire de manipulateur, une section revenant à la trajectoire de manipulateur et/ou un point final sur la trajectoire de manipulateur.
